# FASCICULE DE BREVET EUROPEEN

(11) **EP 0 839 769 B1**
(45) Date de publication et mention de la délivrance du brevet: **23.01.2002**
(21) Numéro de dépôt: 97402590.0
(22) Date de dépôt: 31.10.1997
(51) Int. Cl.: C03B 35/20, C03B 23/03, C03B 23/035

(54) **Procédé et dispositif pour le bombage progressif de vitrages**
Verfahren und Vorrichtung zum progressiven Biegen von Glasscheibe
Method and apparatus for progressif bending of glass sheets

(30) Priorité: 31.10.1996 DE 19643935
(43) Date de publication de la demande: 06.05.1998
(73) Titulaire: SAINT-GOBAIN GLASS FRANCE, 92400 Courbevoie (FR)
(72) Inventeur: Kuster, Hans-Werner, 52066 Aachen (DE)
(74) Mandataire: Le Cam, Stéphane Georges Elie

(56) Documents cités:
- EP-A- 0 351 278
- DE-A- 4 203 751
- US-A- 3 459 521
- US-A- 4 662 925

## Description

La présente invention concerne un procédé pour le bombage progressif de vitrages, dans lequel les vitrages chauffés à la température de bombage sont bombés en position horizontale, dans au moins deux postes de bombage successifs, graduellement dans la forme définitive, sont soulevés par aspiration dans le dernier poste de bombage par une forme de bombage convexe supérieure pourvue d'orifices d'aspiration et sont déposés sur un cadre porteur déplaçable. L'invention concerne, en outre, un dispositif pour l'exécution du procédé.

Les procédés de bombage en plusieurs étapes par compression progressive sont avantageux pour diverses raisons. Notamment, de tels procédés de bombage en plusieurs étapes permettent de fabriquer des formes de vitrages compliquées, par exemple des bombages sphériques, dont la réalisation dans un processus de bombage en une étape unique suscite des difficultés.

Un procédé de bombage en deux étapes et un dispositif approprié pour l'exécution du procédé sont connus par exemple d'après le document DE-4203751 C2. Dans le cas de ce procédé de bombage connu, la forme de bombage inférieure et la forme de bombage supérieure sont conçues, dans les deux postes de bombage, comme des outils de pressage rigides, les formes de bombage supérieures étant chaque fois des formes de bombage à aspiration convexes qui couvrent toute la surface. Le vitrage prébombé est transféré à l'aide de la première forme de bombage à aspiration dans le poste de bombage par compression suivant, tandis que, simultanément, le vitrage bombé achevé est transporté par la forme de bombage à aspiration du deuxième poste de bombage par compression dans un poste de transfert, dans lequel le vitrage est déposé sur le cadre porteur. La préhension répétée des vitrages lors du processus de bombage par les dispositifs de bombage à aspiration fait apparaître le risque que la surface du verre soit altérée par des déplacements relatifs entre le vitrage et les dispositifs de bombage à aspiration.

L'invention a pour but de développer un procédé de bombage progressif comprenant deux ou plus de deux postes de bombage de telle sorte que les déplacements relatifs entre les dispositifs porteurs qui transportent les vitrages à travers l'installation de bombage étape par étape soient réduits. En outre, le procédé doit convenir en particulier pour le bombage de vitrages relativement minces et permettre également la réalisation de bombages sphériques.

Ce but est atteint, conformément à l'invention par un procédé de bombage progressif de vitrages, dans lequel les vitrages chauffés à la température de bombage sont bombés en position horizontale graduellement dans la forme définitive dans au moins deux postes de bombage successifs, sont soulevés par aspiration dans le dernier poste de bombage par une forme de bombage convexe supérieure et sont déposés sur un premier cadre porteur déplaçable, lesdits vitrages étant transportés posés sur une toile de support montée souple sur un second cadre porteur rigide, avec la toile de support et ledit second cadre porteur, étape par étape, à travers l'installation de bombage, et étant bombés conjointement avec la toile de support qui s'adapte à la forme des vitrages.

Grâce au procédé conforme à l'invention, une série d'avantages essentiels sont acquis. D'une part, le vitrage présentant la température de bombage reste soutenu pendant toute l'opération de bombage, sur toute sa superficie, ce qui réduit au minimum le risque de déformations non souhaitées du vitrage, par exemple sous l'effet de la gravité. D'autre part, les déplacements relatifs entre le vitrage et les supports qui transportent le vitrage à travers l'installation, et donc les risques d'altérations de la surface du verre sont complètement évités. En outre, la précision du positionnement du vitrage dans les différents postes de l'installation de bombage est accrue, ce qui améliore le maintien de la forme du vitrage achevé. Finalement, le procédé conforme à l'invention convient, en raison des avantages mentionnés, particulièrement pour le bombage sphérique de vitrages très minces, par exemple de vitrages de moins de 3 mm d'épaisseur. Conformément à l'invention, la fabrication de vitrages bombés sphériquement de faible épaisseur est en effet une opération particulièrement critique, parce que des vitrages très minces ont particulièrement tendance à onduler légèrement au niveau du bord lors de l'opération de bombage.

Dans un développement avantageux de l'invention, le vitrage est bombé au cours d'une première étape de bombage au moyen d'un outil de moulage concave inférieur, dont la surface extérieure, soutenant le bord du vitrage, se trouve essentiellement dans un plan. Lors du prébombage, le vitrage est de cette façon tout d'abord prébombé et étiré dans sa partie centrale, tandis que le bord du vitrage reste dans le plan initial. Si le bombage définitif est ensuite produit au cours d'une deuxième étape de bombage, le risque d'ondulations au niveau du bord est considérablement réduit.

Un autre développement de ce procédé consiste en ce que, au cours de la première étape de bombage, sur le bord du vitrage, on utilise un outil qui agit par le haut sur ce bord et qui comprime la zone marginale immédiate contre la zone marginale plane de la forme concave inférieure. De manière adéquate, les conditions sont en l'occurrence choisies, de telle sorte que seule la région marginale extérieure extrême des vitrages soit serrée ou maintenue.

Le procédé conforme à l'invention peut par exemple être conduit de telle sorte que l'opération de bombage s'effectue en deux étapes, le vitrage pouvant également être prébombé au cours de la première étape de bombage par une forme de bombage convexe couvrant toute la surface et pouvant être abaissée sur le vitrage. De manière adéquate, la forme de bombage convexe supérieure coopère en l'occurrence avec une forme de bombage concave inférieure, qui est montée de manière à pouvoir être élevée et abaissée en dessous du plan de transport de la toile de support.

D'une manière particulièrement avantageuse, l'opération de bombage est effectuée dans le premier poste de bombage sous l'effet d'une différence de pression pneumatique, et ce, à l'aide d'une forme de bombage concave couvrant toute la surface et dans laquelle une dépression peut agir via des orifices pratiqués dans la surface de moulage. La forme de bombage à aspiration est également montée de manière à pouvoir être élevée et abaissée en dessous du plan de transport de la toile de support. Après l'opération de bombage par aspiration, sous l'effet d'une brève mise à l'air, la toile de support avec le vitrage prébombé est libérée de la surface de moulage, la forme de bombage à aspiration est abaissée et le cadre porteur est transporté avec le vitrage prébombé dans le poste de bombage final. Un dispositif pour l'exécution du procédé conforme à l'invention est aussi proposé, ledit dispositif comprenant un poste de prébombage, un poste de bombage final, comprenant une forme de bombage convexe supérieure munie de moyens d'aspiration, un dispositif de transfert mobile entre le poste de bombage final et un poste de refroidissement et un dispositif porteur mobile entre le poste de prébombage et le poste de bombage final ***caractérisé en ce que*** le dispositif porteur est constitué d'un cadre porteur rigide et d'une toile de support montée souple sur le cadre porteur.

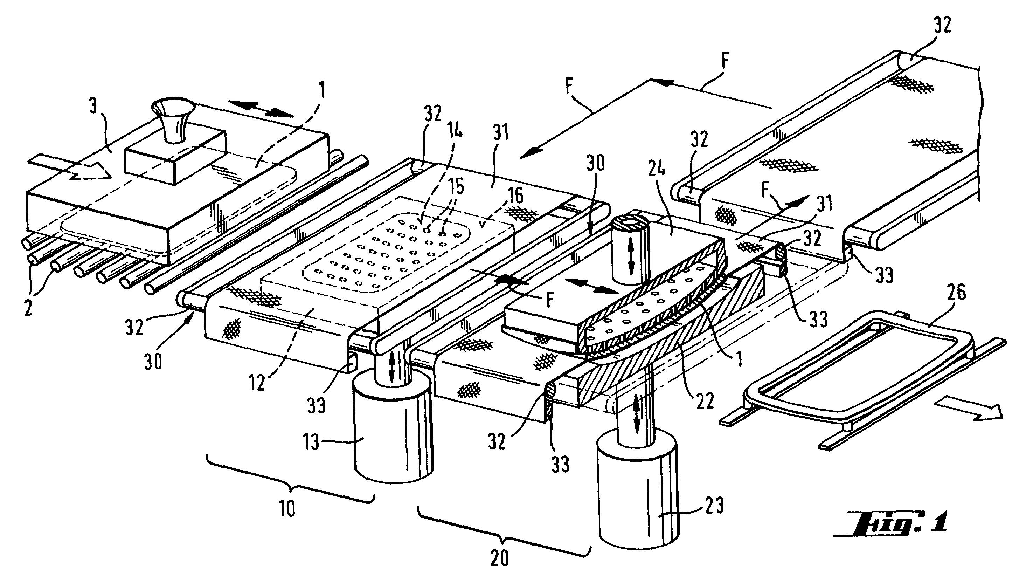

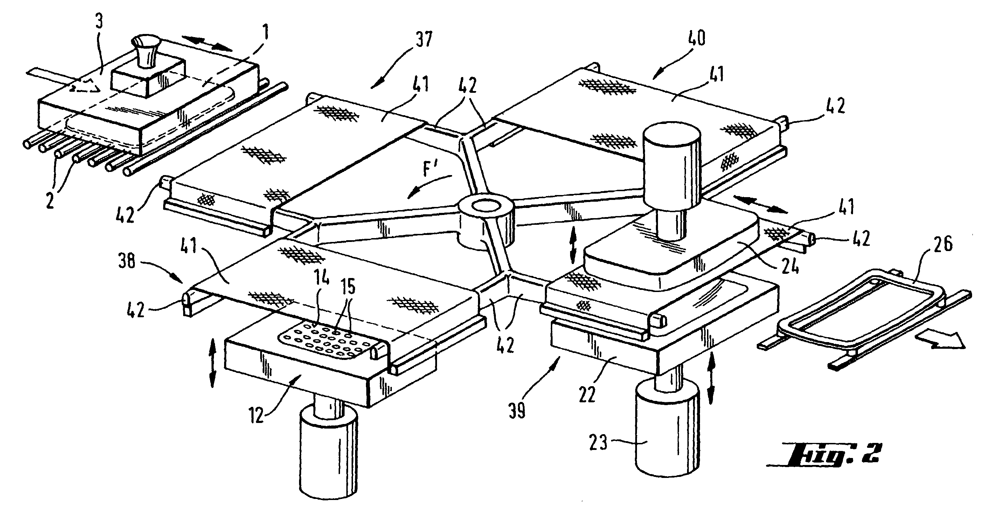

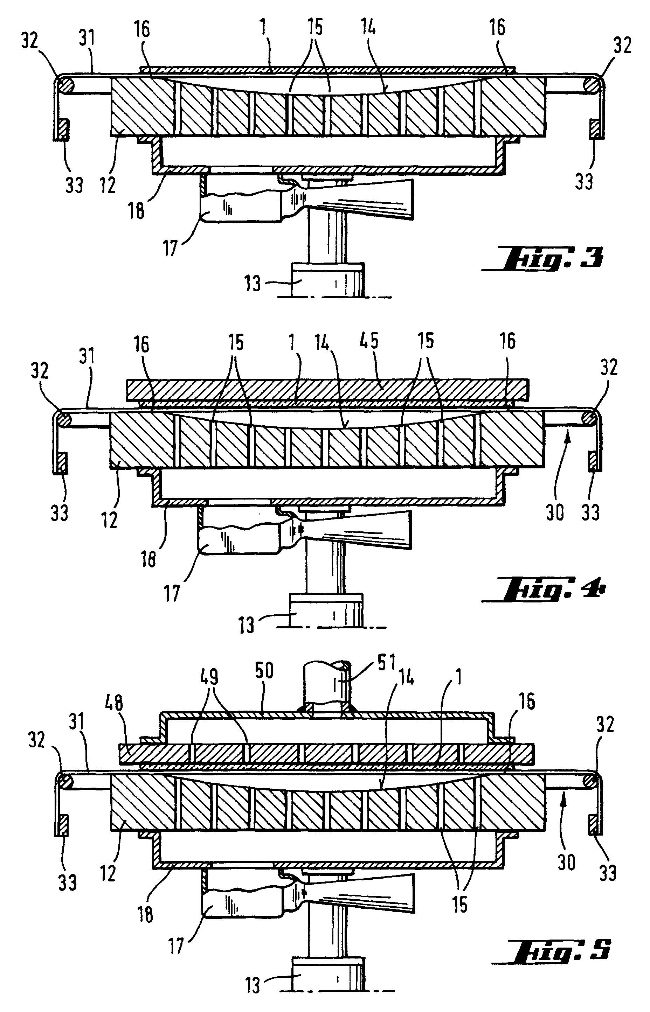

D'autres particularités et avantages de l'invention ressortiront des revendications dépendantes et de la description suivante d'exemples de réalisation préférés à l'aide des dessins suivants :
□ **la figure 1 :** est une vue en perspective schématique d'une première forme de réalisation d'une installation de bombage conforme à l'invention,
□ **la figure 2 :** est une vue également en perspective schématique d'une deuxième forme de réalisation d'une installation de bombage conforme à l'invention,
□ **la figure 3 :** est une vue en coupe d'un dispositif de bombage à aspiration conforme à l'invention,
□ **la figure 4 :** est une vue également en coupe d'un dispositif de bombage à aspiration avec une plaque de retenue supplémentaire pour le bord du vitrage,
□ **la figure 5 :** est une vue également en coupe d'un dispositif de bombage à aspiration avec une alimentation de pression supplémentaire.

Avant que les vitrages 1 ne soient bombés dans une installation de bombage conforme à l'invention, ils sont chauffés dans un four approprié à la température de bombage. Concernant le four, qui n'est pas représenté en tant que tel sur les figures, il peut s'agir, par exemple, d'un four continu à rouleaux à travers lequel les vitrages sont transportés sur des arbres de transport entraînés 2. A la sortie du four continu, ils sont soulevés des rouleaux de transport par une plaque-ventouse 3 plate sur sa face inférieure. La plaque-ventouse 3 peut être déplacée linéairement de manière appropriée et sort le vitrage 1 du four pour l'amener dans l'installation de bombage.

L'installation de bombage comprend un poste de prébombage 10 et un poste de bombage final 20. En outre, l'installation de bombage représentée sur la figure 1 comprend un système de transport pour les vitrages, qui comporte plusieurs cadres porteurs 30 déplaçables dans la direction de la flèche F; sur lesquels est à chaque fois tendue une section de toile 31 montée souple. Cette section de toile 31 sert de support pour les vitrages chauds. Des matières appropriées pour cette toile se composent en particulier de fibres métalliques réfractaires et sont connues en tant que telles et disponibles sur le marché. Suivant l'élasticité et la souplesse souhaitées que cette matière de support doit présenter, on peut utiliser, au lieu de toiles, également des tissus à mailles appropriés composés de fibres métalliques réfractaires. Les sections de toile 31 prennent appui sur deux tiges opposées 32 du cadre 30 et passent librement par dessus les tiges 32. A leurs extrémités sont fixées des barres métalliques 33 qui sont prévues en matières de poids de telle sorte que, d'une part, elles assurent la tension nécessaire de la toile de support et, d'autre part, limitent cependant la tension de la toile de support à une valeur telle que cette toile conserve, après l'opération de prébombage, la forme prédéfinie par le vitrage sous l'effet du poids de ce vitrage. Les cadres porteurs 30 pourvus de toiles porteuses 31 sont acheminées, étape par étape, cycliquement à travers l'installation de bombage. Le système de transport en tant que tel n'est pas représenté afin d'obtenir une meilleure vue d'ensemble.

Le premier poste de bombage, qui est qualifié de poste de prébombage 10 de l'installation de bombage, comprend une forme de bombage à aspiration inférieure 12, qui est montée de manière à pouvoir être élevée et abaissée, par exemple à l'aide d'un vérin 13. La forme de bombage à aspiration 12 présente une surface de moulage concave 14, dans laquelle s'ouvrent de nombreux orifices 15 qui peuvent être alimentés par une dépression. La courbure de la surface de moulage concave 14 correspond pratiquement à la moitié de la courbure de la forme définitive du vitrage. La surface 16 de la forme de bombage à aspiration contiguë à la surface de moulage concave 14 se trouve dans un plan, de sorte que le bord du vitrage, après cette étape de prébombage, se trouve également dans un plan, indépendamment de la forme que présentent le vitrage et son contour, après la dernière étape de bombage.

Egalement dans le poste de bombage final 20, la forme de bombage inférieure 22 est montée de manière à pouvoir être élevée et abaissée à l'aide d'un vérin 23. Dans le cas de cette forme de bombage inférieure 22, il peut s'agir d'une forme de bombage couvrant toute la surface ou d'une forme de bombage du type cadre. Cette forme de bombage inférieure 22 coopère avec la forme de bombage supérieure 24 couvrant toute la surface, qui est également montée de manière à pouvoir être soulevée et abaissée par l'intermédiaire d'un dispositif d'entraînement approprié, par exemple un vérin. La forme de bombage convexe 24 couvrant toute la surface est habituellement pourvue, de manière connue, d'orifices qui peuvent être alimentés, d'une part, par une dépression et, d'autre part, par une surpression, et est couverte, sur la surface de moulage, d'une toile faite de fibres réfractaires.

Le poste de bombage final 20 est suivi d'un poste de refroidissement, en l'occurrence un dispositif usuel qui n'est pas représenté ici. A l'aide d'un cadre porteur déplaçable 26 qui correspond à la forme du bord de vitrage bombé, le vitrage bombé est enlevé de la forme de bombage supérieure 24 et amené dans le poste de refroidissement.

Le mode de travail du dispositif représenté sur la Fig. 1 est le suivant : le vitrage 1 chauffé à la température de bombage est saisi par la plaque-ventouse déplaçable 3 et, à l'aide de la plaque-ventouse, amené dans le poste de bombage 10 et là, déposé sur la toile de support 31. Pendant le retour de la plaque-ventouse 3, la forme de bombage à aspiration 12 est élevée et amenée contre la toile de support 31, et une dépression est établie au niveau de la forme de bombage à aspiration 12. Sous l'effet de l'aspiration de la forme de bombage à aspiration, le vitrage est pressé avec la toile de support 31 vers la surface de moulage concave 14. Lors de cette opération, la toile élastique souple s'étend, tandis qu'au même temps, à l'encontre de l'effet de la gravité des barres 33 fixées à ses extrémités, la longueur active de la toile est augmentée. Une fois l'opération d'aspiration terminée, la dépression est supprimée et la forme est libérée de la toile de support 31 par une courte impulsion de surpression. La forme de bombage à aspiration 12 est abaissée et le cadre 30 se déplace, avec le vitrage prébombé, dans le poste de bombage final 20. Après le positionnement du cadre 30 portant le vitrage prébombé, la forme de bombage concave inférieure 22 et la forme de bombage convexe supérieure 24 sont amenées en même temps en juxtaposition et pressent dès lors le vitrage dans sa forme définitive. La forme de bombage supérieure, par exemple pourvue d'orifices d'aspiration, soulève alors, par effet d'aspiration, le vitrage bombé achevé de la toile de support qui reprend ensuite sa forme plane sous la traction des barres 33. Le cadre porteur 26 vient ensuite sous la forme de bombage 24, reçoit le vitrage bombé de la forme de bombage et l'amène dans le poste de refroidissement suivant.

L'installation de bombage représentée sur la Fig. 2 fonctionne également de manière en principe semblable et se présente en l'occurrence sous la forme d'un carrousel avec quatre postes, à savoir un poste de chargement 37, un poste de prébombage 38, un poste de bombage final 39 et un poste supplémentaire 40, dans lequel la toile de support 41 peut, le cas échéant, être orientée. Les sections de toile de support 41 reposent ici sur les bras 42 d'un cadre du type tourniquet qui est tourné, à chaque étape, de 90° dans le sens de rotation de la flèche F'. Les opérations dans le poste de chargement 37, dans le poste de prébombage 38 et dans le poste de bombage final 39 se déroulent dans ce cas en même temps, ce qui rend une telle forme de réalisation particulièrement économique. En outre, la conception des outils de bombage et le déroulement du procédé sont les mêmes que dans le cas de la forme de réalisation décrite plus haut, de sorte qu'on se reportera, à cet égard, à la description de la Fig. 1.

La Fig. 3 est, encore une fois, une vue en coupe des particularités essentielles du poste de prébombage. La forme de bombage à aspiration 12 se trouve déjà dans la position finale supérieure, en contact par sa surface plane 16 avec la toile de support 31, sur laquelle repose, en position centrée, le vitrage 1. Des orifices 15 pratiqués dans la forme de bombage à aspiration 12 relient la surface de moulage 14 à l'enceinte 18, à laquelle est raccordée une pompe à vide 17. En variante, l'enceinte 18 peut être reliée par l'intermédiaire d'une conduite souple à dépression à un réservoir de dépression, de telle sorte qu'en ouvrant une soupape dans cette conduite, on établisse un vide très rapidement dans la forme de bombage à aspiration, pressant ainsi le vitrage 1 avec la toile de support 31 contre la surface de moulage 14. Ensuite, la forme de bombage à aspiration 12 est immédiatement mise à l'air et s'abaisse à nouveau, puis le vitrage 1 est transporté avec la toile support dans le poste de bombage final.

Dans le cas de la forme de réalisation représentée sur la Fig. 4, le vitrage 1 est maintenu, au cours de l'opération de prébombage, sur sa face supérieure au niveau du bord par une plaque plate 45, qui coopère avec la surface plane 16 de la forme de bombage à aspiration 12. L'utilisation d'une telle plaque 45 est à conseiller dans les cas où le risque d'une ondulation au niveau du bord du vitrage est particulièrement élevé, par exemple dans le cas de bombages sphériques particulièrement importants. En outre, la forme de bombage à aspiration est réalisée aussi précisément que le dispositif décrit sur la Fig. 3.

Dans le cas de bombages sphériques particulièrement importants, il peut s'avérer avantageux d'assister les forces d'aspiration de la forme de bombage à aspiration 12 par des forces de pression pneumatique qui agissent par le haut sur le vitrage. Un dispositif approprié à cet effet, dans lequel le bord du vitrage 1 est en même temps maintenu pour éviter des ondulations, est représenté sur la Fig. 5. Dans ce cas, on utilise une plaque de compression plane 48 qui coopère avec la surface 16 de la forme de bombage à aspiration 12 et qui est abaissée sur le vitrage 1. La plaque 48 est reliée par l'intermédiaire d'orifices 49 à une enceinte 50, qui est mise sous surpression par l'intermédiaire d'une conduite de pression 51 au moment où la dépression est établie au niveau de la forme de bombage à aspiration 12 par l'intermédiaire de l'enceinte 18.

Dans tous les cas décrits, l'étape de prébombage est suivie de l'étape de bombage final avec une presse de bombage de la forme décrite plus haut.

## Revendications

1. Procédé pour le bombage progressif de vitrages, dans lequel les vitrages chauffés à la température de bombage sont bombés en position horizontale graduellement dans la forme définitive dans au moins deux postes de bombage successifs (10, 20, 38, 39), sont soulevés par aspiration dans le dernier poste de bombage par une forme de bombage convexe supérieure (24) et sont déposés sur un premier cadre porteur déplaçable (26), ***caractérisé en ce que*** les vitrages sont transportés posés sur une toile de support (31, 41) montée souple sur un second cadre porteur rigide (30, 42) avec la toile de support (31, 41) et ledit second cadre porteur (30, 42), étape par étape, à travers l'installation de bombage, et sont bombés conjointement avec la toile de support (31, 41) qui s'adapte à la forme des vitrages.

2. Procédé suivant la revendication 1, ***caractérisé en ce que*** l'opération de bombage se déroule en deux étapes, les vitrages étant prébombés au cours de la première étape par une forme de bombage couvrant toute la surface et pouvant être abaissée sur le vitrage.

3. Procédé suivant la revendication 1, ***caractérisé en ce que*** l'opération de bombage se déroule en deux étapes, les vitrages étant prébombés au cours de la première étape par une forme de bombage concave (12) pouvant être mise sous dépression.

4. Dispositif pour l'exécution du procédé suivant la revendication 1, comprenant un poste de prébombage (10, 38), un poste de bombage final (20, 39), comprenant une forme de bombage convexe supérieure (24) munie de moyens d'aspiration, un dispositif de transfert (26) mobile entre le poste de bombage final (20, 39) et un poste de refroidissement et un dispositif porteur mobile entre le poste de prébombage (10, 38) et le poste de bombage final (20, 39), ***caractérisé en ce que*** le dispositif porteur est constitué d'un cadre porteur rigide (30, 42) et d'une toile de support (31, 41) montée souple sur le cadre porteur.

5. Dispositif suivant la revendication 4**, *caractérisé en ce que*** la toile de support (31, 41) repose librement su deux tiges de retenue au niveau de deux côtés opposés l'un à l'autre et est lestée à ses extrémités passant par dessus les tiges de retenue.

6. Dispositif suivant la revendication 4 ou 5, ***caractérisé en ce que,*** dans le poste de prébombage (10, 38) et dans le poste de bombage final (20, 39), une forme de bombage concave (12, 22) abaissable et élevable jusqu'au plan de la toile de support est chaque fois disposée en dessous du plan de transport du dispositif porteur.

7. Dispositif suivant l'une quelconque des revendications 4 à 6, ***caractérisé en ce que*** la forme de bombage concave (12) est une forme de bombage couvrant toute la surface, pouvant être mise sous vide par l'intermédiaire d'orifices (15) pratiqués dans la surface de moulage (14).

8. Dispositif suivant la revendication 7, ***caractérisé en ce que*** dans le poste de prébombage au-dessus de la forme de bombage à aspiration (12) est prévue une plaque (45) que l'on peut abaisser sur le vitrage (1), qui est conçue plane au moins dans sa zone opposée au bord du vitrage (1) et qui empêche une ondulation marginale du vitrage (1).

9. Dispositif suivant la revendication 8, ***caractérisé en ce qu'au***-dessus de la forme de bombage à aspiration (12) est prévue une plaque (48) qui peut être abaissée et qui peut être mise sous surpression par l'intermédiaire d'orifices (49) traversant la plaque (48).

10. Dispositif suivant l'une quelconque des revendications 4 à 9, ***caractérisé en ce que*** les cadres porteurs (30) sont disposés avec la toile de support (31) sur des chariots déplaçables et peuvent être déplacés cycliquement, étape par étape, à travers l'installation de bombage.

11. Dispositif suivant l'une quelconque des revendications 4 à 9, ***caractérisé en ce que*** les cadres porteurs (42) sont disposés sur un tourniquet qui transporte, comme un carrousel, les toiles de support (41), étape par étape, à travers l'installation de bombage.

## Claims

1. Method for the progressive bending of glazings, in which the glazings, heated to the bending temperature, are bent in the horizontal position gradually into the final shape in at least two successive bending stations (10, 20, 38, 39), then raised by suction in the final bending station by an upper, convex bending mould (24) and are deposited on a first, displaceable, carrier frame (26), **characterized in that** the glazings are conveyed placed on a support cloth (31, 41) installed in flexible manner on a second, rigid, carrier frame (30, 42) with the support cloth (31, 41) and said second, carrier frame (30, 42), stagewise, through the bending installation, and are bent jointly with the support cloth (41, 31), which adapts to the shape of the glazings.

2. Method according to claim 1, **characterized in that** the bending operation takes place in two stages, the glazings being prebent during the first stage by a bending mould covering the entire surface and which can be lowered onto the glazing.

3. Method according to claim 1, **characterized in that** the bending operation takes place in two stages, the glazings being prebent during the first stage by a concave bending mould (2), which can be placed under a vacuum.

4. Apparatus for performing the method according to claim 1, comprising a prebending station (10, 38), a final bending station (20,39), comprising an upper, convex bending mould (24) equipped with suction means, a transfer device (26) moving between the final bending station (20, 39) and a cooling station and a mobile, carrier device between the prebending station (10, 38) and the final bending station (20, 39), **characterized in that** the carrier device is constituted by a rigid, carrier frame (30, 42) and a support cloth (31, 41) installed in flexible manner on the carrier frame.

5. Apparatus according to claim 4, **characterized in that** the support cloth (31, 41) rests freely on two retaining rods level with two opposite sides and is weighted at its ends passing above the retaining rods.

6. Apparatus according to claim 4 or 5, **characterized in that**, in the prebending station (10, 38) and in the final bending station (20, 39), there is a concave bending mould (12, 22), which can be lowered and raised to the plane of the support cloth and on each occasion is located below the conveying plane of the carrier device.

7. Apparatus according to any one of the claims 4 to 6, **characterized in that** the concave bending mould (12) is a bending mould covering the entire surface and which can be placed under a vacuum by orifices (15) made in the moulding surface (14).

8. Apparatus according to claim 7, **characterized in that** in the prebending station above the suction bending mould (12) is provided a plate (45) which can be lowered onto the glazing (1), which at least in its zone opposite to the edge of the glazing (1) is planar and prevents a marginal undulation of the glazing (1).

9. Apparatus according to claim 8, **characterized in that** above the suction bending mould (12) is provided a plate (48), which can be lowered and placed under an overpressure by orifices (49) traversing the plate (48).

10. Apparatus according to any one of the claims 4 to 9, **characterized in that** the carrier frames (30) with the support cloth (31) are placed on displaceable carriages and which can be displaced cyclically and stagewise through the bending installation.

11. Apparatus according to any one of the claims 4 to 9, **characterized in that** the carrier frames (42) are placed on a wheel which conveys, in the manner of a carrousel, the support cloths (41), stagewise, through the bending installation.

## Patentansprüche

1. Verfahren zum fortschreitenden Biegen von Glasscheiben, bei dem die auf Biegetemperatur erwärmten Glasscheiben in horizontaler Lage in wenigstens zwei aufeinander folgenden Biegestationen (10, 20, 38, 39) stufenweise in die endgültige Form gebogen und in der letzten Biegestation durch eine mit Saugöffnungen versehene obere konvexe Biegeform (24) durch Saugwirkung angehoben und auf einen ersten verfahrbaren Tragrahmen (26) übergeben werden, **dadurch gekennzeichnet, dass** die Glasscheiben auf einem Trägergewebe (31, 41) liegend, welches auf einem zweiten starren Tragrahmen (30, 42) nachgiebig angeordnet ist, mit dem Trägergewebe (31, 41) und dem besagten zweiten Tragrahmen (30, 42) schrittweise durch die Biegeanlage gefördert und zusammen mit dem sich der Form der Glasscheiben anpassenden Trägergewebe (31, 41) gebogen werden.

2. Verfahren nach Anspruch 1, **dadurch gekennzeichnet, dass** der Biegevorgang in zwei Stufen erfolgt, wobei die Glasscheiben in der ersten Stufe durch eine auf die Glasscheibe absenkbare vollflächige Biegeform vorgebogen werden.

3. Verfahren nach Anspruch 1, **dadurch gekennzeichnet, dass** der Biegevorgang in zwei Stufen erfolgt, wobei die Glasscheiben in der ersten Stufe durch eine konkave, unter Unterdruck setzbare Biegeform vorgebogen werden.

4. Vorrichtung zur Durchführung des Verfahrens nach Anspruch 1, umfassend eine Vorbiegestation (10;38), eine Endbiegestation (20;39), eine obere konvexe Biegeform (24) mit Ansaugmitteln, eine Kühlstation und eine zwischen der Vorbiegestation (10;38) und der Endbiegestation (20;39) bewegbare Tragvorrichtung (26), **dadurch gekennzeichnet, dass** die Tragvorrichtung (26) aus einem starren Tragrahmen (30;42) und einem auf dem Tragrahmen nachgiebig angeordneten Trägergewebe (31;41) besteht.

5. Vorrichtung nach Anspruch 4, **dadurch gekennzeichnet, dass** das Trägergewebe (31;41) an zwei einander gegenüberliegenden Seiten lose über Haltestangen gelegt und an den über die Haltestangen herabhängenden Enden gewichtsbelastet ist.

6. Vorrichtung nach Anspruch 4 oder 5, **dadurch gekennzeichnet, dass** in der Vorbiegestation (10;38) und in der Endbiegestation (20;39) unterhalb der Transportebene der Tragvorrichtung jeweils eine absenkbare und bis auf die Ebene des Trägergewebes anhebbare konkave Biegeform (12,22) angeordnet ist.

7. Vorrichtung nach einem der Ansprüche 4 bis 6, **dadurch gekennzeichnet, dass** die konkave Biegeform (12) eine durch Bohrungen (15) in der Formfläche (14) mit Unterdruck beaufschlagbare vollflächige Biegeform ist.

8. Vorrichtung nach Anspruch 7, **dadurch gekennzeichnet, dass** in der Vorbiegestation oberhalb der Saugbiegeform (12) eine auf die Glasscheibe (1) absenkbare Platte (45) vorgesehen ist, die zumindest in ihrem dem Rand der Glasscheibe (1) gegenüber liegenden Bereich eben ausgebildet ist und eine Wellenbildung der Glasscheibe (1) am Rand verhindert.

9. Vorrichtung nach Anspruch 8, **dadurch gekennzeichnet, dass** oberhalb der Saugbiegeform (12) eine absenkbare Platte (48) vorgesehen ist, die über die Platte (48) durchdringende Bohrungen (49) mit Überdruck beaufschlagbar ist.

10. Vorrichtung nach einem der Ansprüche 4 bis 9, **dadurch gekennzeichnet, dass** die Tragrahmen (30) mit dem Trägergewebe (31) auf verfahrbaren Schlitten angeordnet und im Kreislauf durch die Biegeanlage schrittweise verfahrbar sind.

11. Vorrichtung nach einem der Ansprüche 4 bis 9, **dadurch gekennzeichnet, dass** die Tragrahmen (42) an einem Drehkreuz angeordnet sind, das in Art eines Karussells die Trägergewebe (41) schrittweise durch die Biegeanlage fördert.
